# EUROPEAN PATENT APPLICATION

(11) **EP 4 227 599 A1**
(43) Date of publication of application: **16.08.2023**
(21) Application number: 23156342.0
(22) Date of filing: 13.02.2023
(51) Int. Cl.: F24S 25/613, H02S 20/23

(54) **FASTENING DEVICE, ROOF HOOK AND METHOD FOR ATTACHING A MOUNTING RAIL TO A ROOF**

(30) Priority: 14.02.2022 NL 2030923
(71) Applicant: Van Der Valk Systemen B.V., 2681 LP Monster (NL)
(72) Inventor: Prins, Vincent, 2371 JR Roelofarendsveen (NL)
(74) Representative: Nederlandsch Octrooibureau

(57) **Abstract**

The invention relates to a roof hook (2), holder (21) and fastening device (1) for fastening an object (90) to a roof (80), in particular a solar panel (92) or a solar collector. The fastening device (1) comprises a plurality of roof hooks (2) having a body, and holders (21) which together define a channel through receiving spaces (29) in the holders (21). A mounting rail (3) configured for fastening the object (90) thereto is positioned in the channel and the holders (21) are rotated with respect to the body between a starting position and an end position in order to secure the mounting rail (3) in the receiving spaces (29) of the holders in the end position. The fastening device (1) further comprises a fastening means for securing the holder (21) in the end position. The invention also relates to a method for installing the fastening device (1) and fastening an object (90) to the roof (80) by means of the fastening device (1).

## Description

### Technical field

The invention relates to a roof hook and mounting rail for fastening objects such as solar panels or solar collectors to a roof. The invention also relates to a fastening device comprising a roof hook and mounting rail and to a method for fastening the fastening device to a roof.

### Prior art

Solar panels and solar collectors for solar water heating systems are frequently installed to roofs in order to make existing buildings more sustainable and/or to generate a large amount of electricity in a targeted manner. Such objects are fastened to a roof structure of a roof by means of a fastening device or carrier device. The known fastening device comprises a plurality of roof hooks which are fastened to the roof structure and a mounting rail which is fastened to the roof hooks by means of mechanical fastening means, such as bolts and nuts. The actual object can then be fitted in clamps on the mounting rail and possibly be adjusted in terms of position and/or angle, as in the case of a solar panel in order to obtain a maximum yield. An example of such a fastening device is known from patent document DE 10132557A1.

The known fastening device has a number of disadvantages. A major disadvantage of the known device is that the mounting of an object on the roof constitutes a relatively time-consuming activity, specifically owing to the relatively large number of required mechanical fastening means which have to be applied and fastened one at a time on site. In order to install a long mounting rail for fastening of a plurality of panels, it is necessary for all the roof hooks to lie on approximately the same line and for the mounting rail to then be positioned and secured in the roof hooks one at a time. Only when a mounting rail has been completely secured is it possible to proceed with the installation of the subsequent mounting rail.

In addition, the connection between the roof hooks and the mounting rail often specifically requires a tool other than the one for the mounting of the clamps or objects on the mounting rail. This means an installer has to take several types of tools with them on the roof and has to change tool unnecessarily often. This is not only time-consuming but also inconvenient. In addition, the device can usually only be mounted by specialized professionals, which can also make the mounting of the fastening device and objects relatively expensive.

A further disadvantage of the known devices is that they can often only be mounted in one particular way and there are few possibilities for adjustment. As a result, the layout of the solar panels and/or solar collectors cannot be easily adapted or can be adapted only to a limited extent for a specific device.

The aim of the invention is to provide an improved fastening device by means of which objects such as solar panels and solar collectors for solar water heating systems can be fastened to a roof more easily, more rapidly and/or with greater flexibility.

### Brief description of the invention

To this end, according to a first aspect of the invention, provision is made of a fastening device for fastening an object to a roof, comprising a plurality of roof hooks each provided with a body configured to extend from a top side of the roof and fastening features for connecting a respective roof hook of the plurality of roof hooks to a roof structure of the roof; a plurality of holders each connected to the body of a respective roof hook, wherein the holders each comprise a receiving space and wherein the plurality of holders are positioned at a distance from each other so as to together define a channel through the receiving spaces; and a mounting rail configured for fastening the object thereto and positioned in the channel, wherein each of the plurality of holders can be rotated with respect to the body of a respective roof hook between a starting position and an end position, wherein, in the starting positions of the holders, the mounting rail can be positioned in the receiving spaces of the plurality of holders, and wherein, in the end positions of the holders, the mounting rail is secured in the receiving spaces, the fastening device further comprising a fastening means for securing the holder in the end position.

In this context, a top side of the roof is defined by the top layer of roof covering, for example roof tiles. The top side is an imaginary plane which extends in the form of an average plane between the possibly corrugated tiles or some other kind of roof covering. In embodiments, the roof is a pitched roof, preferably having an angle of inclination of at least 5 degrees with respect to the horizon. The majority of pitched roofs on which the device can be used will have an angle of inclination of between 15 and 60 degrees with respect to the horizon. The roof covering may for example be formed by tiles, slate, bitumen, PVC or another conventional type of roof covering.

A major advantage of the fastening device is the speed and simplicity with which the mounting rail can be fastened to the roof hooks during installation. When the roof hooks have been fitted to the roof and the holders of the roof hooks have all been positioned in the starting position, there is enough space to be able to position the mounting rail in its longitudinal direction in the channel. Subsequent rotation of the holders from the starting position to the end position secures the mounting rail within the receiving spaces of the holders. The holders are then secured in the end position and it is no longer possible to pull the mounting rail out of the holders of the roof hook. In this way, the fastening device can be installed in a very rapid and simple manner.

Another advantage of the fastening device is that only a rotational movement is required to secure the mounting rail in the receiving spaces, and no other elements which connect the holder to the body. The holder can then be secured in the end position by means of the fastening means. This fastening means can be of a simple type, and may for example be a bolt and nut, screw, clamp, quick-release device, wing nut or another known fastening means. In this context, the term quick-release device is used for a connecting means having, on the one side, a screw thread by means of which a securing piece can be tightened, and, on the other side, a spring system with a small lever for tensioning the spring. A quick-release device is usually used, in particular, in the wheel of a racing bike in order to be able to change a wheel rapidly. Pre-mounting of the fastening means in a loose state is often already possible so that the one fastening means or the multiple fastening means only have to be tightened or tensioned in order to secure the holder in the end position. The end position is usually achieved by a rotation of the holder in a plane substantially parallel to the top side of the roof, but the rotation may also take place in another plane.

In one embodiment, the mounting rail is clamped by the holder at at least three fixing points in the end position. The three fixing points are located on both sides of the mounting rail in order to prevent the mounting rail from rotating in a plane parallel to the roof surface. The fixing points can also be formed in multiple ways. For example on a flat part of the mounting rail as a pressure point, or by a clamping of a clamping part of the mounting rail within the holder.

In one embodiment, the holder comprises a rotatable part and a fixed part, wherein rotation of the rotatable part is prevented in the end position.

In one embodiment, the fastening device comprises a plurality of fastening means for securing the plurality of holders in the end position. Preferably, all the holders are secured in the end position so that none of the holders have freedom of movement and as little wear as possible occurs when the fastening device is being used. However, a person skilled in the art will understand that, for the stability of the mounting rail, it is only necessary for one or two of the holders to be secured in the end position, depending on the embodiment of the holder. The holders may be secured, for example, by means of a bolt and nut, wing nut, quick-release device or another type of fastening means.

In one embodiment, rotation of the mounting rail in a plane substantially parallel to the top side of the roof is prevented by positioning at least two holders of the plurality of holders in the end position. The positioning of the mounting rail in a plurality of holders at the same time along the longitudinal direction of the mounting rail prevents rotation from being able to take place. In alternative embodiments, additional elements may be used to prevent such a rotation, such as a second type of roof hook having two legs which extend along one or more sides of the mounting rail. Such elements may then be positioned between the plurality of roof hooks with the aim of preventing rotation.

In one embodiment, the mounting rail can be positioned in the holder in the starting position by means of a rectilinear movement, preferably in a direction towards the top side of the roof. The mounting rail can be easily positioned in the holders from above when the holders are in the starting position. This ensures rapid and simple mounting, in which preferably all the mounting rails are firstly arranged and only then secured by securing the holders in the end position one at a time.

In one embodiment, the mounting rail is positioned in the plurality of holders at the same time. This ensures a simple method which can usually be carried out by a single installer without assistance from colleagues.

In one embodiment, the mounting rail is provided with a clamping part and each receiving space is configured with a complementary feature in order to receive the clamping part and clamp it in the end position. The clamping can also be effected in multiple ways. In a first example, the rotation of the holder changes the direction in which the mounting rail extends through the receiving space. In this way, the channel which is defined in a direction parallel to the longitudinal direction of the mounting rail becomes narrower. Thus, the mounting rail can be clamped in the holder in the end position. In a second example, the rotation of the holder has the effect that fixing points of the holder, which in the starting position are located at a distance from the holder, are brought towards a side of the mounting rail. In this way, the channel which runs in a direction parallel to the longitudinal direction of the mounting rail also becomes narrower.

In a further embodiment, the receiving space is delimited by a supporting rib for supporting the mounting rail and two side faces, wherein the complementary feature is an indentation in at least one of the side faces, preferably at the height of the supporting rib, wherein the clamping part of the mounting rail is provided with a projecting flange configured to be accommodated in the indentation in the side face in the end position. The indentation prevents the upward movement of the mounting rail in the holder when the holder has been positioned in the end position. Preferably, both side faces comprise an indentation so that the mounting rail is retained on both sides. In one embodiment, the indentation is made at the height of the supporting rib, but in other embodiments the indentation may also be made at a different height, wherein the clamping part of the mounting rail is configured to be accommodated in the indentations.

In one embodiment, the indentations are configured in such a way as to also clamp the mounting rail against displacements along the longitudinal direction of the mounting rail by means of friction.

In one embodiment, in the end position, the supporting rib forms an angle of 45 degrees with the channel. In embodiments, the body of the holder runs parallel to the mounting rail and the supporting rib will also form an angle of 45 degrees with the body of the holder. A symmetrical position ensures that the mounting rail can be installed in a direction parallel and perpendicular to the direction of inclination of the roof using the same roof hook and holder and that this can be performed in an identical manner. The installer thus does not have to think and can use the same elements and carry out the same method regardless of the orientation of the mounting rail. The starting position and end position do not have to be defined as a single position, but may also lie within a certain range of positions so that the positions do not have to be set accurately before the mounting rail is positioned. This further speeds up the installation procedure. In a further embodiment, in the starting position, the supporting rib forms an angle of at most 35 degrees with the channel, or at least 55 degrees with the channel.

In one embodiment, the receiving space is a first receiving space configured to form a first channel in a first direction, wherein the holder further comprises a second receiving space which is configured to form a second channel in a second direction, wherein the first direction preferably forms an angle of 90 degrees with the second direction. This offers the possibility of installing a mounting rail in a plurality of configurations in the holder. Preferably, a configuration in a direction parallel to the direction of inclination and a configuration in a direction substantially perpendicular to the direction of inclination may be used for positioning of the mounting rail.

In an alternative embodiment, the starting position is a first starting position and the holder can also be positioned in a second starting position, wherein, in the first starting position, a mounting rail can be positioned in a first configuration in the holder, and wherein, in the second starting position, the mounting rail can be positioned in a second configuration in the holder. Preferably, a mounting rail in the first configuration is at an angle of 90 degrees with respect to a mounting rail in the second configuration. This offers the possibility of being able to position a mounting rail both in a direction parallel to the direction of inclination and in a direction substantially perpendicular to the direction of inclination.

In one embodiment, the holder further comprises a guide in order to guide the rotation of the holder with respect to the body of the roof hook. By adding a guide to the holder, it is possible for the rotation of the holder with respect to the roof hook to be limited to a single plane. Preferably, the guide limits the rotation of the holder to a rotation in a plane substantially parallel to the top side of the roof and/or the guide prevents misalignment of the holder with respect to the mounting rail. This prevents the holder from being able to end up in a position other than the starting position or end position.

In one embodiment, the connection between the body of the roof hook and the holder is height-adjustable. The advantage of a connection which is height-adjustable is that the holder can be positioned relatively close to the roof surface, regardless of the thickness of the roof structure and of the thickness of the roof covering. A height-adjustable connection between the roof hook and holder thus ensures that the fastening device can be used for various types of roofs.

In one embodiment, the fastening means connects the body and the holder to each other, wherein the body of the roof hook further comprises a slot which extends along a normal direction of the top side of the roof, and wherein the fastening means can be moved through the slot in order to be able to adjust the height of the connection between the body of the roof hook and the holder. The fastening means may be, for example, a bolt and nut, wing nut or a quick-release device. The presence of the slot provides the freedom to adapt the height of the connection between the roof hook and the holder. This makes the fastening device suitable for various objects and roof types, wherein the distance between the underside of the object and the top side of the roof can be selected at the installer's choice. The slot extends along a normal direction of the top side of the roof. That is to say that the slot can be fitted both in a direction perpendicular to the top side of the roof and at an angle, as long as the adjustment of the connecting means through the slot ensures that the roof hook and the holder can be adjusted in terms of height. In this context, the height is defined from the top side of the roof.

In one embodiment, the holder comprises an aperture which extends along the normal direction of the top side of the roof, wherein the fastening means can be moved through the aperture in order to be able to adjust the height of the connection between the body of the roof hook and the holder. The aperture may be used separately from or in addition to the slot in the holder in order to provide the freedom to adapt the height of the connection between the roof hook and the holder. This makes the fastening device suitable for various objects and roof types. An advantage of the use of both a slot and aperture is that the total height of the roof hook remains limited while a relatively large height adjustment is made available. For certain types of objects, for example for solar panels, it will be favourable to limit the height of the fastening device. A lower height of the roof hook has the result that the solar panels can be mounted relatively close to the roof. This can afford advantages in terms of aerodynamics.

The top side of the roof has a direction of inclination. In one embodiment, the mounting rail can be positioned both in a direction substantially parallel to the direction of inclination and in a direction substantially perpendicular to the direction of inclination. This makes the fastening device widely usable for various roof shapes and roof types and additionally makes the installation easier. An installer does not have to pay attention to which type of roof hook is being used and/or the manner in which a certain roof hook has to be fitted since they can all be fitted in the same manner.

In one embodiment, the roof hook, holder and/or the mounting rail are extruded. In order to manufacture the roof hooks and holders, a long profile is preferably extruded and then sawn into pieces so as to form a plurality of roof hooks and holders, respectively. The sawn profiles are then processed to give the final shape, for example by means of milling and/or punching techniques. The mounting rail is preferably formed as a rectangular tube profile manufactured by extrusion and sawn to size along the longitudinal direction prior to installation.

In one embodiment, the holder is made of aluminium. Aluminium is lightweight and strong. As an alternative, fibre-reinforced plastic or sheet steel could be used, for example.

In one embodiment, the roof hook is made of a metal or metal alloy, preferably of steel. The roof hook is preferably made of stainless steel to prevent corrosion. As an alternative, the roof hook could also be made, for example, of aluminium, galvanized steel or plastic.

In one embodiment, the fastening device further comprises a plurality of clamping elements, wherein the clamping elements are fastened on or to the mounting rail and wherein the clamping elements each comprise a clamping head for securing the object between two clamping heads. In some embodiments, all the clamping elements are of the same type. In other embodiments, it is possible to use two or more types of clamping elements. In a further embodiment, a distinction is made between central clamping elements and end clamps. Central clamping elements are configured to clamp at least two panels on both sides of a central clamping element. End clamps are only configured to clamp one panel on one side of the clamp and are typically positioned at the end of a mounting rail.

In one embodiment, one or more of the following elements are fastened on or to the mounting rail: a clamp for fastening a micro-inverter, a cable fastening means, a sealing cap, and/or a rail coupling element in order to connect a second mounting rail to the mounting rail. The cable fastening means may be positioned on the mounting rail so as to secure cables, for example the cables from and to solar panels, to the fastening device. A sealing cap may be positioned at the end of a mounting rail. A mounting rail typically has a rectangular tube-like profile. The sealing cap is used to seal the rectangular tube-like profile and prevents contamination and/or moisture from being able to penetrate the profile. Installations of the fastening device can sometimes be tens of metres long. In order to facilitate the transport and the installation, in embodiments, a mounting rail may consist of a plurality of components which are coupled to each other by a rail coupling element.

In one embodiment, the device is suitable for a roof having an angle of inclination of between 5 and 70 degrees, preferably between 15 and 60 degrees. In this way, the fastening device is suitable for almost any type of pitched roof.

In one embodiment, the connection between the body and the holder is a releasable connection. This has the advantage that the fastening device can be easily removed and that the various components can be manufactured and replaced independently of each other.

In one embodiment, the fastening means is a quick-release device. The quick-release device may be fitted in the connection between the body and the holder, but may also be fitted in the connection between the rotatable part and the fixed part of the holder when the holder consists of at least two parts. The quick-release device provides rapid fastening of the mounting rails to the roof hooks.

According to a second aspect, and in accordance with the above-described advantages and effects, the invention provides a roof hook with holder for use in the fastening device. Preferably, the holder and roof hook are connected to each other by means of the fastening means. Due to such pre-mounting, less time is required for the installation of the fastening device on the roof.

According to a third aspect, and in accordance with the above-described advantages and effects, the invention provides a holder for use in the fastening device.

According to a fourth aspect, and in accordance with the above-described advantages and effects, the invention provides a mounting rail for use in the fastening device.

In one embodiment, the mounting rail has a top side with a recess. An advantage of such a recess is that space is created for partially accommodating elements which are fastened on the mounting rail. In this way, the height of the fastening device can remain limited and objects can be positioned relatively close to the top side of the roof. The recess preferably has a height of between 5 mm and 10 mm.

According to a further aspect, and in accordance with the above-described advantages and effects, the invention provides a kit of components comprising a plurality of roof hooks with holders according to the invention and a plurality of mounting rails according to the invention.

In one embodiment, the kit comprises one or more of the following elements: a clamp for fastening a micro-inverter, a cable fastening means, a sealing cap, and/or a rail coupling element.

According to a further aspect, and in accordance with the above-described advantages and effects, the invention provides a method for installing a mounting rail to a roof of a building for the fastening of objects, comprising: fastening a plurality of holders to the roof, wherein each holder has a receiving space for accommodating a mounting rail, wherein the receiving space has a first part having a first width and a second part, wherein the second part has a second width greater than the first width and is configured to receive a clamping part of the mounting rail; aligning the holders in a starting position so as to form a continuous channel through the receiving spaces of the holders, such that the mounting rail can be positioned in a plurality of holders at the same time; positioning the mounting rail in the holders; rotating the holders with respect to the mounting rail from their respective starting position to an end position, as a result of which the channel becomes narrower and the mounting rail is prevented from being able to be removed from the channel; and securing the mounting rail in the holders in the end position.

In one embodiment, the mounting rail is secured by securing at least two of the holders in the end position. Preferably, all the holders are secured in the end position so that none of the holders have freedom of movement and as little wear as possible occurs when the fastening device is being used. However, a person skilled in the art will understand that, for the stability of the mounting rail, it is only necessary for one or two of the holders to be secured in the end position, depending on the embodiment of the holder. The holders may be secured, for example, by means of a bolt and nut, wing nut, quick-release device or another type of fastening means.

According to a further aspect, and in accordance with the above-described advantages and effects, the invention provides a method for fastening an object, preferably a solar panel or solar collector of a solar water heating system, to a roof by means of a fastening device, wherein the method comprises installing a mounting rail to the roof according to the invention; and fastening the object to the mounting rail.

### Brief description of the figures

Exemplary embodiments of the invention will subsequently be described solely by way of example with reference to the accompanying schematic drawings. In the figures, corresponding components are indicated by corresponding reference symbols. A number of examples of a component may be indicated with an additional letter in their reference symbol. For instance, two examples of a certain component "40" may be indicated by "40a" and "40b". The reference symbol may be used without the additional letter (for example "40") to generally refer to an unspecified example or to all examples of that component, while the reference symbol will include an additional letter (for example "40a") to refer to a specific example of the component.
Figure 1 shows a schematic perspective view of a first embodiment of a fastening device fitted to a pitched roof.
Figure 2A shows a perspective view of a roof hook suitable for use in the fastening device in Figure 1.
Figure 2B shows a side view of the roof hook in Figure 2A.
Figures 2C-2E show a top view of the roof hook in Figures 2A and 2B at different moments during the fastening of a mounting rail to the roof hook.
Figure 3 shows a cross section of the transverse profile of the mounting rail.
Figure 4 shows a perspective view of an assembly of the fastening device according to one embodiment.
Figure 5A shows a perspective view of a roof hook according to a second embodiment, suitable for use on a roof as illustrated in Figure 1.
Figure 5B shows a top view of the roof hook in Figure 5A.
Figures 5C-5F show a top view of the roof hook in Figures 5A and 5B at different moments during the fastening of a mounting rail to the roof hook.

The drawings are only intended for illustrative purposes, and do not serve to limit the scope of protection defined by the claims.

### Description of embodiments

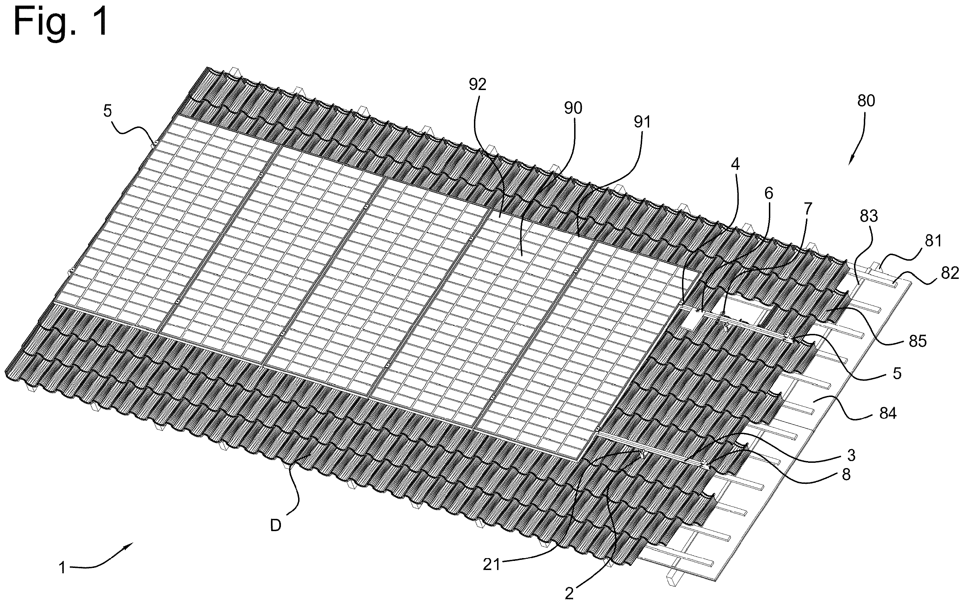

Figure 1 shows a schematic perspective view of a roof 80 provided with purlins 81, battens 82, rafters 83, roof boarding 84 and roof tiles 85. A top side D of the roof is defined by the roof tiles 85. The top side D of the roof 80 conforms to the shape of the roof tiles 85 and is substantially parallel to the roof boarding 84.

A number of objects 90 are fastened to the roof 80 by means of a fastening device 1 according to a first embodiment. The objects 90 are solar panels 92 in a frame 91 which are positioned parallel to the top side D of the roof 80. The frame 91 has dimensions of approximately 1 m in width, 2 m in length and 35 mm in thickness. The frame 91 is clamped in the fastening device 1. An advantage of the fastening device 1 is that it can be adjusted in a simple manner in order to be used for the fastening of objects 90 with an arbitrary thickness. Solar panels usually have a thickness of between 20 and 50 mm and the fastening device can therefore be used for various types of solar panels.

The fastening device 1 comprises a plurality of roof hooks 2, mounting rails 3, clamping elements 4, end clamps 5, clamps for micro-inverters 6, cable fastening means 7 and sealing caps 8. In the embodiment depicted, the roof hooks 2 are hung around the battens 82, but in other embodiments the roof hook 2 can potentially also be screwed to the battens 82 or another component of the roof structure such as the roof boarding 84. Furthermore, it is also possible for a connecting element, for example a wooden plank, which is screwed to the rafters 83 to be used to fasten the roof hooks 2 to the rafters 83 indirectly via the additional connecting element.

The roof hooks 2 curve around the roof tiles 85 and/or pass between the roof tiles 85 so that they extend from the top side D of the roof. Furthermore, the roof hooks 2 each comprise a holder 21 which holds the mounting rail 3. Fastened to the mounting rail 3 are the plurality of clamping elements 4, end clamps 5, clamps for micro-inverters 6, and cable fastening means 7, which are used to secure the objects 90 in a stable manner. The mounting rails 3 consist of a hollow rectangular tube profile with open ends which are sealed by the sealing caps 8. The mounting rails 3 can be fastened to the holders 21 of the roof hooks 2 in a simple manner due to the fact that the roof hooks 2 comprise pre-mounted fastening elements which only need to be tensioned or tightened in order to establish the connection between the roof hook 2 and mounting rail 3.

The sealing caps 8 prevent moisture and/or other dirt from being able to get inside the mounting rail 3. In addition, the sealing caps 8 perform an aesthetic function. The sealing caps 8 can visually compensate for irregularities in the lengths of the mounting rail 3 up to about 30 mm. This prevents unevenly sawn mounting rails 3 from being rejected unnecessarily. In addition, the sealing caps 8 are black or darker in colour. In this way, the caps match well with the solar panels 92. Since the sealing caps 8 are positioned over the visible part of the mounting rails 3, it is not necessary to paint the mounting rails 3 in a more attractive colour.

An advantage of the fastening device 1 shown is that the objects 90 can be mounted in a simple and relatively rapid manner using conventional tools. No special equipment is required to fasten the fastening device 1 and objects 90 to the roof, and all the connections are preferably selected such that the same tool can be used for all the connections between the various components of the fastening device 1. This is in contrast to conventional systems in which often various types of tools have to be used during installation.

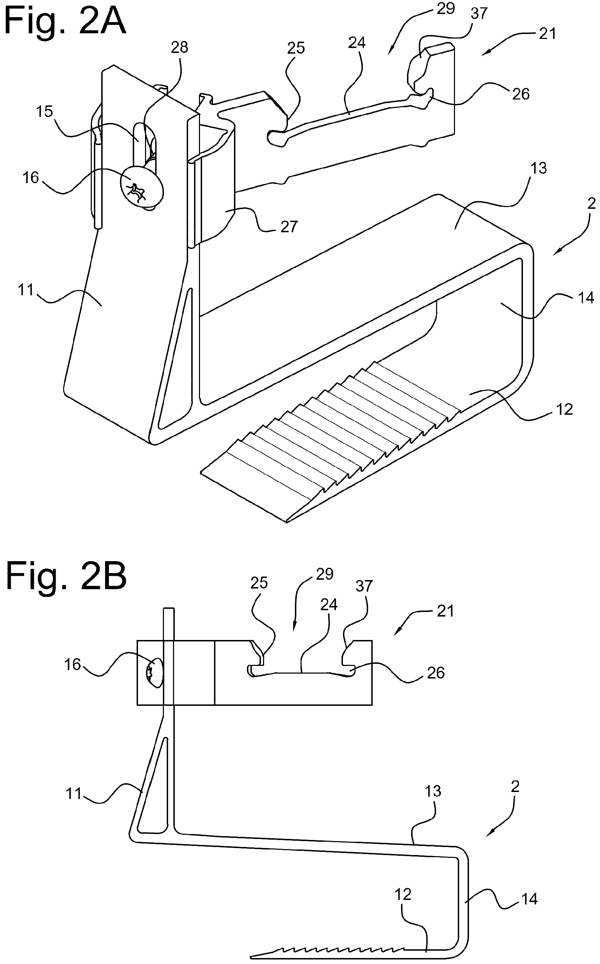

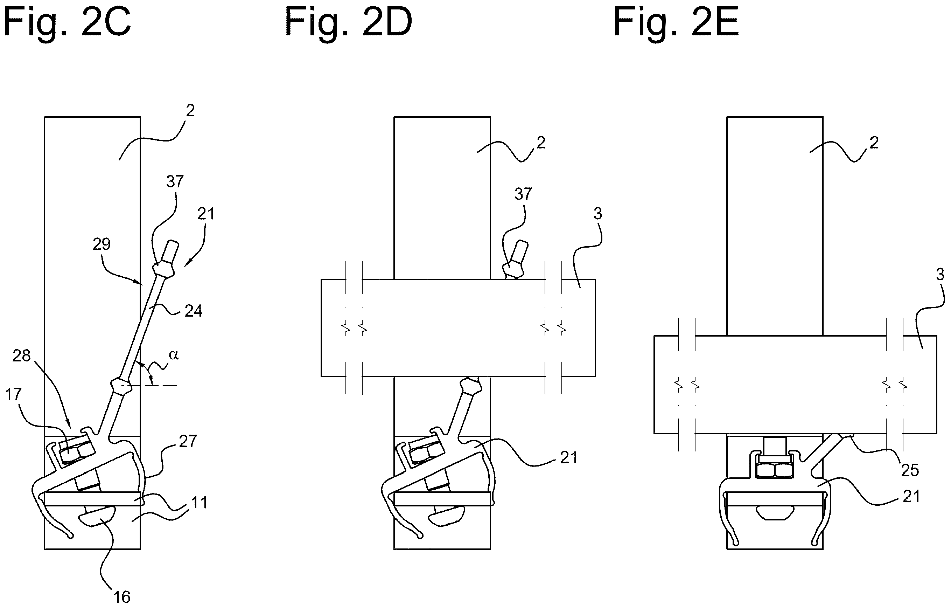

Figures 2-4 describe the various components of the fastening device 1 from Figure 1 in more detail. Figure 2A illustrates a perspective view of a roof hook 2 with holder 21 according to a first embodiment. Figures 2B and 2C respectively illustrate a side view and top view of the roof hook 2 with holder 21 from Figure 2A. Figures 2D and 2E, like Figure 2C, also illustrate a top view of the roof hook 2, but at different moments during the fastening of a mounting rail 3.

The roof hook 2 comprises a body 11, a first clamping side 12, a second clamping side 13, a rear side 14 and a slot 15. The first and second clamping sides 12, 13 and rear side 14 together form a hook shape and are configured to engage with opposite sides of a batten 82. The first clamping side 12 also has a profile for providing additional resistance on the batten 82 and preventing sliding of the roof hook 2 off of the batten 82. In the embodiment depicted, the roof hook 2 is hung around the battens 82 without the use of further mechanical fastening means.

The body 11 is located on a front side and is configured to extend from the top side D of the roof 80 when the first and second clamping sides 12, 13 engage with a batten 82. The total height of the body 11 is limited and about 11 cm so that, measured from the top side D, the roof hook protrudes by at most 9 cm. The holder 21 is secured in the slot 15 in the body 11 by means of a bolt 16 and nut 17 (see Figure 2C). The slot has a length of about 3 cm and therefore allows a first height adjustment of about 3 cm in the connection of the holder 21 to the body 11. This makes it possible to indirectly vary the distance between the top side of the mounting rail 3, and the elements fastened thereto, and the top side of the roof hook 2. This has the advantage that an optimal height of the mounting rail 3 above the top side of the roof 80 can be obtained, regardless of the type of roof structure and/or the roof covering.

The holder 21 has a supporting rib 24, two side faces 25 each having an indentation 26 in the side faces 25 at the height of the supporting rib 24 and an oblique part 37 at a top of the side face 25. The two side faces 25 and the supporting rib 24 define a receiving space 29. The holder 21 further comprises two guides 27 and an aperture 28.

The bolt 16 passes through the aperture 28 so that the roof hook 2 and holder 21 can be secured to each other by means of the bolt 16 and nut 17. This connection may be a fixed connection, wherein the roof hook 2 and holder 21 are connected to each other at least in hand-tight fashion, or the connection may be a loose connection, wherein the bolt 16 and nut 17 are not tightened fully so that there is play between the roof hook 2 and holder 21. Such play makes it possible for the holder 21 to be moved with respect to the body 11 of the roof hook 2. This movement consists of at least a rotation and possibly also a small displacement.

The guides 27 extend along the body 11 of the roof hook 2 and prevent rotation of the holder 21 about the axis of the bolt 16 in the case of a loose connection. The rotation possibilities of the holder 21 in the case of a loose connection are therefore substantially limited to a rotation in a plane extending perpendicularly with respect to the body 11. In addition, it is possible for the holder 21 to be displaced vertically through the slot 15 and aperture 28.

The aperture 28 has a length of about 2 cm and therefore allows an additional height adjustment in the connection between the holder 21 and the body 11. It is favourable for both a slot 15 in the body 11 and an aperture 28 in the holder 21 to be incorporated so that the maximum height of the roof hook 2 can remain limited while a substantial height adjustment in the connection between the holder 21 and the body 11 can nevertheless be achieved.

Figure 2C illustrates a top view of the roof hook 2, the holder 21 being loosely connected to the body 11. The holder 21 is rotated so that the supporting rib 24 forms an angle a with the body 11 of the roof hook 2. The angle α defines a first starting position of the holder 21 when the angle is smaller than 35 degrees and defines a second starting position when said angle is greater than 55 degrees. The end position of the holder 21 is reached when the angle α is approximately 45 degrees. The side faces 25 are thus spaced far from each other so as to allow the mounting rail 3 to be positioned in the receiving space 29 when the holder 21 is in one of the starting positions, while a positioning of the mounting rail 3 in the receiving space 29 is prevented when the holder 21 is in the end position.

The position as shown in Figure 2C is a second starting position with an angle α of approximately 55 degrees, such that the holder 21 can receive a mounting rail 3. In this second starting position, the mounting rail 3 can be positioned in a direction parallel to the body 11 of the roof hook 2 and parallel to the battens 82, as depicted in Figure 1A. The oblique part 37 ensures that the mounting rail 3 is guided into the receiving space 29 by itself. This makes the positioning of the mounting rail 3 easier.

Figure 2D shows a top view of the roof hook 2 with holder 21 after a mounting rail 3 has been positioned on the supporting rib 24. When installing the fastening device 1, firstly at least two roof hooks 2 and preferably all the roof hooks 2 of the entire fastening device 1 should be fitted to the roof 80. The roof hooks 2 with holders 21 are positioned in the starting position and aligned with each other so that a channel is formed, in which a mounting rail 3 can extend through the holders 21 of a plurality of roof hooks 2. When the mounting rail 3 has been fitted in the channel, the holders 21 of the respective roof hooks 2 can be manoeuvred to the end position.

Figure 2E illustrates a top view of the roof hook 2 with holder 21 in the end position, the pre-mounted bolt 16 and nut 17 having been tightened. Due to the tightening of the bolt 16 and nut 17, the angle α is automatically adjusted to the end position at about 45 degrees. The indentations 26 are configured to allow a rotation of the holder 21 with respect to the mounting rail 3 when the latter is resting on the supporting rib 24. The rotation of the holder 21 causes the channel through which the mounting rail 3 runs to become narrower. The indentations 26 receive a clamping part of the mounting rail 3 in order to thus prevent an upward movement of the mounting rail 3 with respect to the holder 21. Due to the fact that the mounting rail 3 is positioned in a plurality of holders 21 at the same time, rotation of the mounting rail 3 is also prevented and the mounting rail 3 can no longer be removed, by a rotation thereof, from the holders 21.

In the longitudinal direction of the individual profile, sliding of the mounting rail 3 in the holders 21 is obstructed by friction. The indentations 26 in the side faces 25 are formed in such a way that they clamp the mounting rail 3 in the holder 21. Even when exerting a considerable force, it will not be possible for an installer to slide the mounting rail 3 by hand after fastening in the holders 21. There is therefore also no risk of the mounting rail 3 sliding by itself or under the influence of the gravitational force of the objects 90.

Removal of the mounting rail 3 from the holder 21 is performed in a similar manner. After the bolt 16 and nut 17 have been loosened, the holder 21 can be rotated from the end position to the starting position before removal of the mounting rail 3 by moving it upwards. The mounting rail 3 is therefore fastened and removed in a simple manner, without the occurrence of significant wear. This makes potential re-use of the fastening device 1 or components thereof possible.

A major advantage of the roof hook 2 with holder 21 is that it can not only be used to mount a mounting rail 3 in the above-described so-called horizontal configuration, that is to say parallel to a batten 82 and in a direction perpendicular to the maximum direction of inclination of the roof 80, but also in a vertical direction, that is to say parallel to a rafter 83 and parallel to the maximum direction of inclination of the roof 80. In this way, only one type of roof hook 2 with holder 21 is required, which affords advantages in terms of production, procurement and storage. In addition, the installer cannot accidentally install the wrong type of roof hook.

For mounting in a vertical configuration, the holder 21 is positioned in a first starting position with an angle α smaller than 35 degrees. In this case, the channel for accommodating the mounting rail is defined parallel to the maximum direction of inclination of the roof. Due to the fact that the angle α in the end position is 45 degrees and the holder 21 is mirror-symmetrical, a mounting rail is clamped in the vertical configuration in the same manner as described above for mounting in the horizontal configuration.

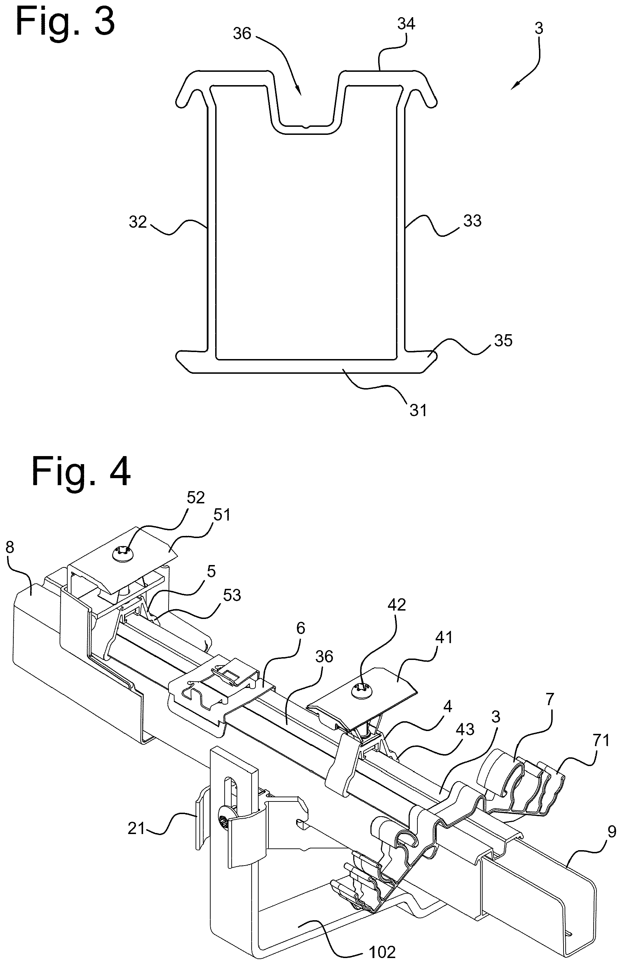

Figure 3 illustrates a cross section of a mounting rail 3 which is suitable for use in combination with the roof hook 2 from Figures 2A-2E. The mounting rail 3 has a rectangular tube-like profile with a flat underside 31, first side 32, second side 33 and top side 34. The underside 31 is configured to be positioned on the supporting rib 24 and has a projecting flange 35 which extends from both sides 32, 33. The flange 35 is dimensioned such that it fits in the indentations 26 of the holder 21 so as to thus be able to lock the mounting rail 3 in place. The flange 35 therefore forms a clamping part of the mounting rail 3 which is clamped in the indentations 26.

There is a recess 36 on the top side 34 of the mounting rail 3. This recess 36 is approximately 7 mm deep and is provided so as to be able to partially accommodate fastening elements of the clamping elements 4 within the mounting rail 3. This has the advantage that relatively thin objects can also be secured in the clamping elements while the height of the fastening device 1 remains limited due to the fact that the fastening elements can partially pass into the recess 36. This height adjustability therefore ensures that objects with different thicknesses can all be positioned relatively close to the top side of the roof in the fastening device.

Figure 4 illustrates a perspective view of an assembly comprising elements of a fastening device 1. A person skilled in the art will understand that the position of the elements on the mounting rail is illustrated only by way of indication and that, in the case of an actual fastening device suitable for the fastening of objects, the various elements will be positioned at a different position, such as schematically indicated in Figure 1.

The assembly comprises a roof hook 102 with holder 21, mounting rail 3 with recess 36, clamping element 4 with clamping head 41, fastening element 42 and clamping body 43, end clamp 5 with end clamp head 51, fastening element 52 and clamping body 53, clamp for a micro-inverter 6, cable fastening means 7 with cable grooves 71, sealing cap 8 and rail coupling element 9. The roof hook 102 as depicted differs from the roof hook 2 in the first embodiment with regard to fastening to the roof structure. The roof hook 102 is configured to be screwed to the roof structure.

Objects can be clamped between the clamping heads 41, 51 of two clamping elements 4, two end clamps 5, or a clamping element 4 and end clamp 5. The fastening elements 42, 52 of the clamping element 4 and end clamp 5 connect the respective clamping heads 41, 51 to the respective clamping bodies 43, 53, and allow a height adjustment of the clamping heads 41, 51. The fastening elements 42, 52 can, in the case of a low position, be partially accommodated in the recess 36 of the mounting rail 3 so that objects with different thicknesses can be clamped while the total mounting height remains limited.

The clamp 6 is fitted to the mounting rails 3 in order to fasten a micro-inverter or optimizer. The cable fastening means 7 is configured with a plurality of cable grooves 71 for guiding cables along the mounting rail. Specifically for the application of fastening solar panels, cables of each panel will be able to be guided away via the cable grooves 71. The sealing cap 8 cooperates with the end clamp 5. The sealing cap 8 and end clamp 5 can together be pushed in one go onto the end of the mounting rail 3 in order to thus seal the open end of the mounting rail 3.

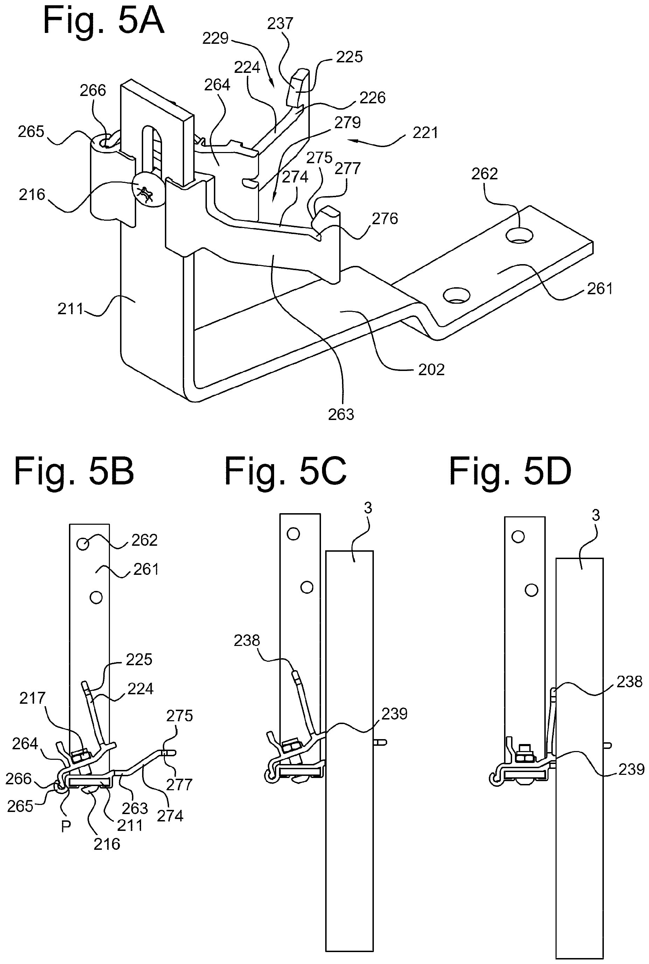

Figures 5A-5F illustrate a roof hook 202 with holder 221 according to a second embodiment. The roof hook 202 with holder 221 can likewise be used on a pitched roof as depicted in Figure 1 and in combination with the mounting rail 3 from Figure 3. Elements and properties of the above-described roof hook with holder (Figures 2A-2E) may also be present in the roof hook with holder in Figures 5A-5F, and are not discussed again here. Comparable elements are indicated with similar reference numerals preceded by 200 in order to distinguish the embodiments.

Figure 5A illustrates a perspective view of a roof hook 202 with holder 221. Figure 5B illustrates a top view of the roof hook 202 with holder 221 from Figure 5A. The roof hook 202 comprises a body 211 which extends from a screw-on surface 261. The screw-on surface 261 comprises two screw holes 262 for fastening the roof hook 202 to the roof structure. A person skilled in the art will understand that the choice of such screw fastening or hanging fastening as shown in Figure 2A may depend on the roof structure, the specific application, and/or applicable local standards. The manner of fastening of the roof hook 202 to the roof 80 should therefore be considered independently of the type of holder 21, 221 that is used.

In the embodiment shown, the holder 221 consists of a fixed part 263 and a rotatable part 264. Both the fixed part 263 and the rotatable part 264 are fastened to the body 211 by means of a bolt 216 and nut 217 (see Figure 5B), in the same manner as described above. The fixed part 263 is also provided with a bowl 265 in which the rotatable part 264 pivots about pivot point P. To this end, the rotatable part 264 has a pin-like end 266.

The rotatable part 264 has a supporting rib 224, two side faces 225 each having an indentation 226 in the side faces 225 at the height of the supporting rib 224 and an oblique part 237 at a top of the side face 225. The side faces 225 laterally delimit a first receiving space 229 which can be used to mount a mounting rail 3 in the above-described so-called horizontal configuration.

The fixed part 263 also has a supporting rib 274 and two side faces 275, of which one side face 275 has an indentation 276 at the height of the supporting rib 274 and an oblique part 277 at a top of the side face 275. The side faces 275 laterally delimit a second receiving space 279 which can be used to mount a mounting rail 3 in the above-described so-called vertical configuration.

Figures 5C and 5D, like Figure 5B, also illustrate a top view of the roof hook 202, but in this case during the fastening of a mounting rail 3 in the vertical configuration. Figure 5C illustrates a top view of the roof hook 202, the rotatable part 264 of the holder 221 being rotatably connected to the fixed part 263. The holder 221 is still in the starting position and the mounting rail 3 has only been laid in the receiving space 279 in a direction perpendicular to the body 211. The receiving space 279 is wider than the mounting rail 3, as a result of which the mounting rail is not yet secured. When the mounting rail 3 has been fitted in a plurality of holders 221 of respective roof hooks 202, the rotatable parts 264 of the respective holders 221 can be manoeuvred to the end position.

Figure 5D illustrates a top view of the roof hook 202 with holder 221 in the end position. The pre-mounted bolt 216 and nut 217 have been screwed together, as a result of which fixing points 238, 239 of the rotatable part 263 come into contact with a side of the mounting rail 3. The screwing together of the bolt 216 and nut 217 pushes the mounting rail 3, at the fixing points 238, 239, sideways into the indentation 276 of the fixed part 263. A channel through which the mounting rail 3 can extend is delimited by the indentation 276 and fixing points 238, 239. Due to the fact that a fixing point 238, 239 is located on both sides of the supporting rib 274 in the longitudinal direction of the mounting rail 3, rotation of the mounting rail 3 is also prevented in the end position and the mounting rail 3 can no longer be removed, by a rotation thereof, from the holder 221.

In the longitudinal direction of the individual profile, sliding of the mounting rail 3 in the holder 221 is obstructed by friction. The indentation 276 in the side face clamps the mounting rail 3 in the holder 221. Removal of the mounting rail 3 from the holder 221 is performed in a similar manner.

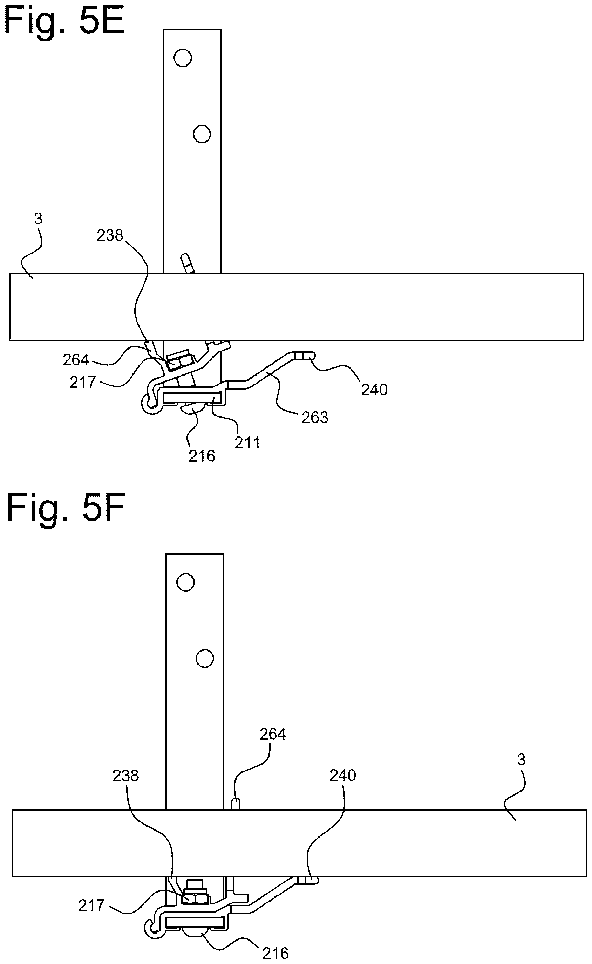

Figures 5E and 5F illustrate a top view of the roof hook 202 at two different moments during the fastening of a mounting rail 3 in the horizontal configuration. A mounting rail 3 is positioned on the supporting rib 224 of the rotatable part 264, as depicted in Figure 5E. Due to the tightening of the bolt 216 and nut 217, the mounting rail 3 is clamped between a first fixing point 238 on the rotatable part 264, a second fixing point 240 on the fixed part 263 and one of the indentations 226, as depicted in Figure 5F. In this configuration, the clamping at three different locations also ensures that the mounting rail 3 can no longer be displaced and/or rotated.

It will be clear that the above-described embodiments are only described by way of example and not in any limiting sense, and that various changes and modifications are possible without departing from the scope of the invention and that the scope is only determined by the attached claims.

In another example of the roof hook with holder, a quick-release device may be provided as fastening means in addition to, or as an alternative to, the bolt and nut. The quick-release device may be fitted in the slot and aperture in the holder and the body in order to simultaneously regulate the height and the freedom of rotation of the holder with respect to the body of the roof hook and/or the fixed part of the holder. Specifically in the second embodiment, the quick-release device may also be fitted in order to regulate only the degree of rotation of the rotatable part of the holder with respect to the fixed part of the holder. The height of the holder with respect to the roof hook may be preset and it is only necessary to secure the quick-release device in order to thus secure the holder in the end position.

## Claims

1. Fastening device for fastening an object to a roof, comprising
a plurality of roof hooks each provided with a body configured to extend from a top side of the roof and fastening features for connecting a respective roof hook of the plurality of roof hooks to a roof structure of the roof;
a plurality of holders each connected to the body of a respective roof hook, wherein the holders each comprise a receiving space and wherein the plurality of holders are spaced at a distance from each other so as to together define a channel through the receiving spaces; and
a mounting rail configured for fastening the object thereto and positioned in the channel, wherein each of the plurality of holders can be rotated with respect to the body of a respective roof hook between a starting position and an end position,
wherein, in the starting positions of the holders, the mounting rail can be positioned in the receiving spaces of the plurality of holders, and wherein, in the end positions of the holders, the mounting rail is secured in the receiving spaces, the fastening device further comprising
a fastening means for securing the holder in the end position.

2. Fastening device according to claim 1, wherein the mounting rail is clamped by the holder at at least three fixing points in the end position.

3. Fastening device according to claim 1 or 2, wherein the holder comprises a rotatable part and a fixed part, wherein rotation of the rotatable part is prevented in the end position.

4. Fastening device according to one of the preceding claims, further comprising a plurality of fastening means for securing the plurality of holders in the end position.

5. Fastening device according to one of the preceding claims, wherein the mounting rail can be positioned in the holder in the starting position by means of a rectilinear movement, preferably in a direction towards the top side of the roof, and more preferably wherein the mounting rail is positioned in the plurality of holders at the same time.

6. Fastening device according to one of the preceding claims, wherein the mounting rail is provided with a clamping part and wherein each receiving space is configured with a complementary feature in order to receive the clamping part and clamp it in the end position, preferably wherein the receiving space is delimited by a supporting rib for supporting the mounting rail and two side faces, wherein the complementary feature is an indentation in at least one of the side faces, preferably at the height of the supporting rib, wherein the clamping part of the mounting rail is provided with a projecting flange configured to be accommodated in the indentation in the side face in the end position.

7. Fastening device according to one of the preceding claims, wherein the receiving space is a first receiving space configured to form a first channel in a first direction and wherein the holder further comprises a second receiving space which is configured to form a second channel in a second direction, wherein the first direction preferably forms an angle of 90 degrees with the second direction.

8. Fastening device according to one of claims 1-6, wherein the starting position is a first starting position and wherein the holder can also be positioned in a second starting position, wherein, in the first starting position, a mounting rail can be positioned in a first configuration in the holder, and wherein, in the second starting position, the mounting rail can be positioned in a second configuration in the holder.

9. Fastening device according to one of the preceding claims, wherein
- the holder further comprises a guide in order to guide the rotation of the holder with respect to the body of the roof hook; and/or
- the connection between the body of the roof hook and the holder is height-adjustable; and/or
- the connection between the body and the holder is a releasable connection.

10. Fastening device according to one of the preceding claims, wherein the fastening means connects the body and the holder to each other and wherein the body of the roof hook further comprises a slot which extends along a normal direction of the top side of the roof, wherein the fastening means can be moved through the slot in order to be able to adjust the height of the connection between the body of the roof hook and the holder, preferably wherein the holder comprises an aperture which extends along the normal direction of the top side of the roof, wherein the fastening means can be moved through the aperture in order to be able to adjust the height of the connection between the body of the roof hook and the holder.

11. Fastening device according to one of the preceding claims, wherein the holder is made of aluminium, and/or wherein the roof hook is made of a metal or metal alloy, preferably of steel.

12. Fastening device according to one of the preceding claims, wherein one or more of the following elements are fastened on or to the mounting rail:
- a plurality of clamping elements, wherein the clamping elements each comprise a clamping head for securing the object between two clamping heads;
- a clamp for a micro-inverter;
- a cable fastening means;
- a sealing cap; and/or
- a rail coupling element in order to connect a second mounting rail to the mounting rail.

13. Roof hook with holder for use in the fastening device according to one of claims 1-12.

14. Method for attaching a mounting rail to a roof of a building for the fastening of objects, comprising:
- fastening a plurality of holders to the roof, wherein each holder has a receiving space for accommodating a mounting rail, wherein the receiving space has a first part having a first width and a second part, wherein the second part has a second width greater than the first width and is configured to receive a clamping part of the mounting rail;
- aligning the holders in a starting position so as to form a continuous channel through the receiving spaces of the holders, such that the mounting rail can be positioned in a plurality of holders at the same time;
- positioning the mounting rail in the holders;
- rotating the holders with respect to the mounting rail from their respective starting position to an end position, as a result of which the channel becomes narrower and the mounting rail is prevented from being able to be removed from the channel;
- securing the mounting rail in the holders in the end position, preferably by securing at least two of the holders in the end position.

15. Method for fastening an object, preferably a solar panel or solar collector of a solar water heating system, to a roof by means of a fastening device according to claims 1-12, wherein the method comprises
- attaching a mounting rail to the roof according to claim 14; and
- fastening the object to the mounting rail.
